# EUROPÄISCHE PATENTSCHRIFT

(11) **EP 0 953 141 B1**
(45) Veröffentlichungstag und Bekanntmachung des Hinweises auf die Patenterteilung: **06.09.2006**
(21) Anmeldenummer: 97953915.2
(22) Anmeldetag: 23.12.1997
(51) Int. Cl.: G01F 23/38, G01F 23/36, G01D 5/165

(54) **FÜLLSTANDSGEBER**
LEVEL INDICATOR
INDICATEUR DE NIVEAU

(30) Priorität: 16.01.1997 DE 19701246
(43) Veröffentlichungstag der Anmeldung: 03.11.1999
(73) Patentinhaber: SIEMENS AKTIENGESELLSCHAFT, 80333 München (DE)
(72) Erfinder: GIER, Lothar, D-61231 Bad Nauheim (DE); WALLRAFEN, Werner, D-65719 Hofheim (DE)
(86) Internationale Anmeldenummer: PCT/EP1997/007267
(87) Internationale Veröffentlichungsnummer: WO 1998/031991

(56) Entgegenhaltungen:
- WO-A-81/03077
- WO-A-94/27119
- DE-A- 4 309 442
- DE-A- 19 526 254
- FR-A- 2 559 259

## Beschreibung

Die Erfindung betrifft einen Füllstandsgeber, insbesondere für den Tank eines Kraftfahrzeuges, bei welchem ein Widerstandsnetzwerk an einem feststehenden Träger angeordnet ist, wobei am Widerstandsnetzwerk entsprechend der Position eines dem Niveau einer Flüssigkeit folgenden Schwimmers ein Ausgangssignal abnehmbar ist.

Derartige Füllstandsgeber sind zum Einsatz in Kraftfahrzeugtanks im Zusammenhang mit Fördereinheiten bekannt. Solche Fördereinheiten stützen sich im eingebauten Zustand am Boden des Fahrzeugtankes ab. Der Füllstandsgeber ist dabei am Schwalltopf direkt oder über einen Geberträger, welcher wiederum am Schwalltopf befestigt ist, angeordnet. In Abhängigkeit vom Füllstand des Tanks wird von einem Schwimmer über einen Schwimmerhebel ein Schleiferpotentiometer des Füllstandsgebers betätigt. Am Schleiferpotentiometer wird aufgrund des sich verändernden Füllstandes ein diesem entsprechendes elektrisches Signal abgegriffen.

Aus der WO 94/27119 A1 ist ein Füllstandsgeber gemäss Oberbegriff des Anspruchs 1 bekannt. Mittels eines Schwimmers wird ein Sensormagnet bewegt, welcher mit einer Kontaktstruktur verbunden ist, deren Kontaktelemente auf einem Schleiferpotentiometer schleifen. Das Widerstandsnetzwerk des Schleiferpotentiometers ist auf einer Leiterplatte angeordnet, wobei am Widerstandsnetzwerk ein Ausgangssignal in Abhängigkeit vom Niveau der Flüssigkeit abnehmbar ist. Der erfindungsgemäße Füllstandsgeben weist keine offenen kontakte gegenüber dem ihn ungebenden Medium auf. Um den Nachteil des Verschleißes der mechanischen Bestandteile eines solchen Schleiferpotentiometers zu unterbinden, ist aus der Entgegenhaltung WO 81/03077 ein variabler Widerstand bekannt, welcher aus einer ganzflächigen Widerstandsschicht und einer zu dieser Widerstandsschicht beabstandet angeordneten magnetischen Kontaktstruktur besteht. In Abhängigkeit von der Position eines Magneten werden Teile der Kontaktstruktur auf die Widerstandsschicht gezogen und bilden somit eine elektrische Verbindung.

Aus DE-A-43 09 442 ist ein Positionssensor bekannt, bei dem die Position eines Magneten gemessen wird. Der Magnet bewirkt, daβ auf einer Folie befindliche Zungen einer Widerstandsschicht und parallel dazu angeordnete Zungen einer Leiterbahn einer elektrisch leitfähigen Schicht in Kontakt kommen.

FR-A-2 4 559 259 beschreibt einen Füllstandsgeber, bei dem ein Schwimmer einen Arm bewegt, welcher einen Magneten trägt, der einen aus einer kreisförmigen Reihe von Magnetschaltern schließt.

Der Erfindung liegt somit die Aufgabe zugrunde, einen Füllstandsgeber anzugeben, welcher verschleißarm arbeitet, billig herstellbar ist, eine hohe Genauigkeit aufweist und gegen äußere Einflüsse dicht ist.

Erfindungsgemäß ist die Aufgabe durch die Merkmale des Kennzeichens des Patentanspruches 1 gelöst.

Der Vorteil dieses Füllstandsgebers besteht darin, daß er vollständig verschleißfrei arbeitet. Weiterhin besitzt er eine hohe Kontaktzuverlässigkeit und weist eine hohe Auflösung auf. Die Kontaktstruktur kann dabei jede Struktur sein, die auf irgendeine Art und Weise zungenartige Federelemente aufweist, egal ob diese Federelemente einzeln aufgesetzt werden oder im Verbund von mehreren Federelementen als einstückige Struktur ausgebildet sind.

Die Verbesserung der Kontaktfähigkeit erfolgt durch die auf dem Substrat aufgebrachten Kontaktflächen, wodurch ein erschütterungsfreier und robuster Aufbau des Positionssensors mit nur geringen Abmessungen möglich ist, was besonders für den Einsatz in Kraftfahrzeugen vorteilhaft ist.

Auf Grund der Nutzung des isoliernden Substrates als Gehäusewandung ist nur mit wenigen Bauteilen ein Füllstandsgeber herstellbar, der unemp-findlich gegenüber aggressiven Umgebungsbedingungen ist sowie ein Eintauchen des Füllstandsgebers in den Kraftstoff erlaubt.

In einer Weiterbildung sind auf dem Substrat Leiterbahnen angeordnet, wobei das Ende jeder Leiterbahn eine Kontaktfläche bildet.

Die Kontaktstruktur ist dabei im konstanten Abstand zu den Kontaktflächen angeordnet, welche unter Einwirkung der Magneteinrichtung mit der Kontaktstruktur in Berührung treten. Die Kontaktstruktur kann dabei eine Kontaktfederstruktur sein oder aus separaten Kontaktfedern bestehen. Die Kontaktfederstruktur kann aber auch eine einstückige Biegebalkenstruktur sein.

In einer Ausführung ist das Widerstandsnetzwerk als schichtförmige Widerstandsbahn ausgebildet und kann sowohl in Dünnschicht- oder in Dickschichttechnik hergestellt sein. Die Leiterbahnen sind teilweise mit der Widerstandsbahn bedeckt und das Ende jeder Leiterbahn bildet dabei die Kontaktfläche.

Eine zuverlässige Arbeitsweise wird ermöglicht, wenn die Magneteinrichtung gegen die Außenseite des Gehäuses vorgespannt ist, so daß sie leicht berührend bewegbar ist.

- Weitere Ausgestaltungen sind in den Unteransprüchen gekennzeichnet.

Die Erfindung läßt zahlreiche Ausführungsformen zu, wobei eine anhand der in der Zeichnung dargestellten Figuren näher erläutert werden soll. Es zeigt:
Figur 1 Füllstandsgeber im eingebauten Zustand,
Figur 2 als Potentiometer ausgebildete magnetischer Positionssensor,
Figur 3 Widerstandsbahn mit Leiterbahn im Schnitt,
Figur 4 Ausgangssignal des Füllstandsgebers,
Figur 5 Ersatzschaltbild des magnetischen Positionssensor,
Figur 6 Kontaktierung der elektrischen Anschlüsse,
Figur 7 magnetischer Positionssensor in Dünnschichttechnik.

Gleiche Merkmale sind in allen Figuren mit den gleichen Bezugszeichen gekennzeichnet.

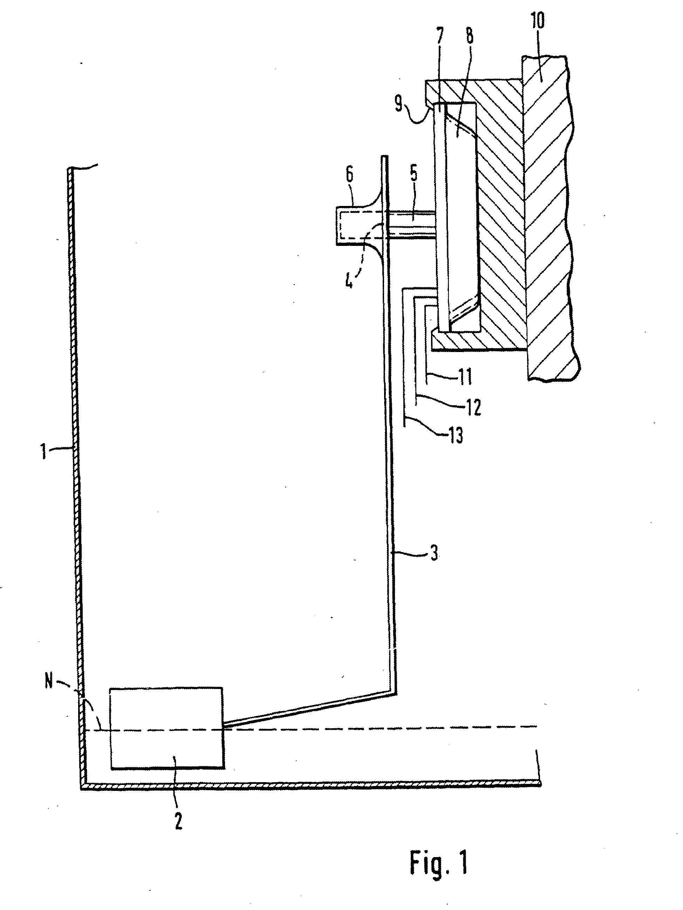

In Figur 1 ist schematisch die Anordnung des erfindungsgemäßen Füllstandsgebers in einem Schwalltopf 1 dargestellt. Das durch den Kraftstoff gebildete Niveau N ist gestrichelt dargestellt.

Ein Schwimmer 2 ist mit einem Schwimmerhebel 3 verbunden. Dieser Schwimmerhebel 3 weist an dem dem Schwimmer 2 entgegengesetzten Ende eine Öffnung 4 auf, in welcher ein Magnet 5 kraftschlüssig in einer Hülse 6 angeordnet ist. Der aus der Öffnung 4 herausragende Magnet 5 ist über den Schwimmerhebel 3 gegen die Außenseite des Gehäuses 7, 8 vorgespannt, so daß der Magnet 5 leicht berührend entsprechend der Position des Schwimmers 2 bewegbar ist.

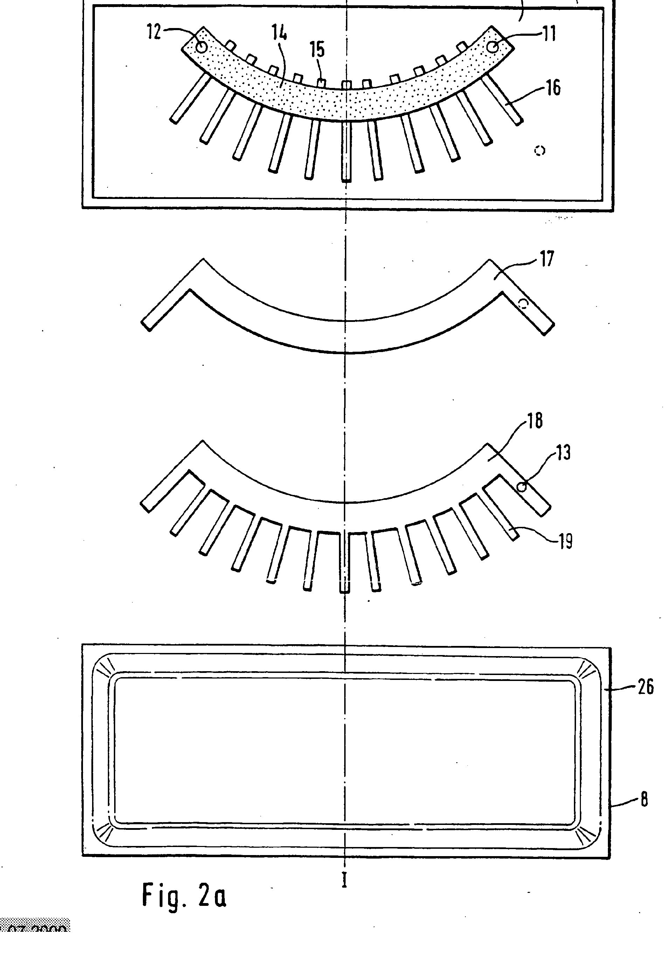

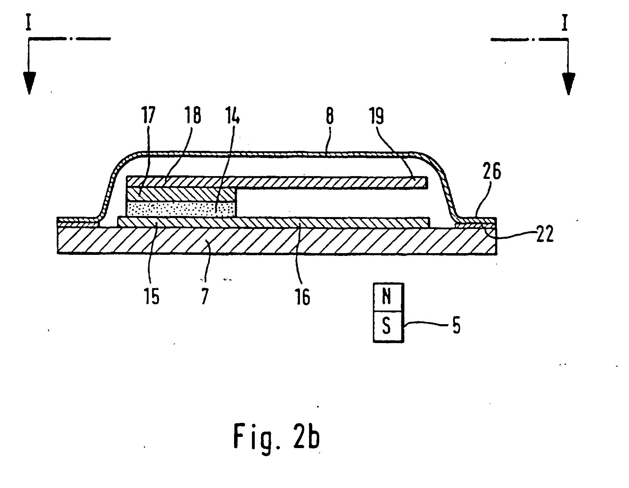

Das Gehäuse 7, 8 besteht aus einem isolierenden Substrat 7, welches mit einer Gehäuseabdeckung 8 dicht verlötet, verschweißt oder verklebt ist. Substrat 7 und die Gehäuseabdeckung 8 bestehen aus Material mit gleichem bzw. ähnlichem Temperaturausdehnungskoeffizienten. Das Gehäuse 7, 8 ist mittels einer an einem Geberträger 10 angeordneten Clipseinrichtung 9 befestigt. Der Geberträger 10 ist selbst fest mit dem Schwalltopf 1 verbunden, was nicht weiter dargestellt ist. Aus dem Substrat 7 sind die elektrischen Anschlüsse 11, 12, 13 eines magnetischen Positionssensors herausgeführt, welcher im Gehäuse 7, 8 montiert ist. Der in dem Gehäuse 7, 8 angeordnete magnetische Positionssensor soll mit Hilfe der Figur 2 erläutert werden.

Der magnetische Positionssensor ist in Figur 2a schematisch auf der Basis einer Dickschichtanordnung in Form eines bogenförmigen Potentiometers in seinen einzelnen Teilen dargestellt. Figur 2b ist ein Schnitt durch den montierten Positionssensor entlang der Linie I-I zu entnehmen.

Das unmagnetische Substrat 7 trägt ein Widerstandsnetzwerk in Form einer schichtförmigen Widerstandsbahn 14, welche sich zwischen den elektrischen Anschlüssen 11 und 12 erstreckt.

Unter der Widerstandsbahn 14 sind auf dem Substrat 7 mehrere Leiterbahnen 15 angeordnet. Die Leiterbahnen 15 werden teilweise von der Widerstandsbahn 14 abgedeckt. Dabei bildet ein von der Widerstandsbahn nicht bedecktes Ende jeder Leiterbahn 15 eine Kontaktfläche 16, die mit Gold oder Silber beschichtet ist.

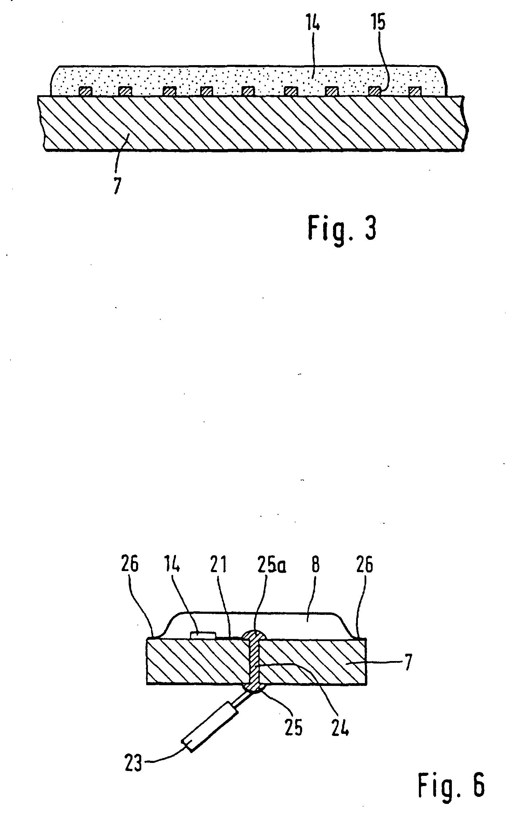

Die Schnittdarstellung in Figur 3 zeigt, daß die Leiterbahnen 15 im Bereich der Widerstandsbahn 14 vollständig von dieser umschlossen sind, um eine zuverlässige elektrische Kontaktierung zu gewährleisten. Gemäß Figur 2 ist auf dem Substrat 7 deckungsgleich zur Widerstandsbahn 14 ein Abstandshalter 17 angeordnet, auf welchem eine einstückige, kammförmige Biegebalkenstruktur 18 in Form einer weichmagnetischen Folie aufgebracht ist.

Alternativ dazu besteht die Biegebalkenstruktur 18 aus nicht magnetischem Material, welches mit einer magnetischen Schicht versehen ist.

Die kammförmige weichmagnetische Biegebalkenstruktur 18 besteht aus einseitig gestützten, frei beweglichen Biegebalken 19. Die Biegebalken 19 sind zur Reduzierung des Kontaktwiderstandes galvanisch mit einer Gold- oder Silberschicht beschichtet.

Der Abstandshalter 17 hält die frei beweglichen Enden der Biegebalkenstruktur 18 in einem definierten Abstand zu den Kontaktflächen 16.

Die frei beweglichen Enden der Biegebalken 19 sind überdeckend zu den Kontaktflächen 16 angeordnet. Dabei ist die als weichmagnetische Folie ausgebildete Biegebalkenstruktur 18 selbst elektrisch leitfähig und steht mit dem außenliegenden elektrischen Anschluß 13 in Verbindung.

Die Widerstandsbahn 14 ist, wie bereits erläutert, über die Anschlüsse 11 und 12 elektrisch mit Masse und der Betriebsspannung U_{B} verbunden. Die Signalspannung U_{AUS} des Positionsgebers ist über den elektrischen Anschluß 13 abgreifbar, der mit der Biegebalkenstruktur 18 verbunden ist. Die Signalspannung U_{AUS} ist im Bereich von 0 V bis U_{B} variierbar und stellt die Position eines Permanentmagneten 5 dar.

Der Permanentmagnet 5, welcher wie beschrieben außerhalb des Gehäuses 7, 8 beweglich gegenüber der abgewandten Seite des die Widerstandsbahn 2 tragenden Substrats 1 angeordnet ist, wird im Bereich der Überlagerung der Kontaktflächen 16 mit den frei beweglichen Enden 19 der einseitig gestützten Biegebalken 19 bewegt. Der Permanentmagnet 5 kann dabei mittels einer Feder derart vorgespannt sein, daß er entlang der Gehäuseaußenseite, z. B. der Substrataußenseite, berührend bewegbar ist.

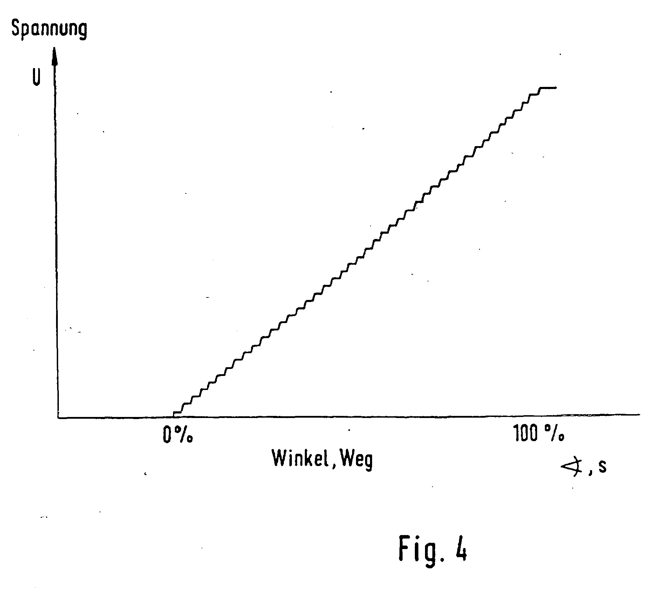

Die frei beweglichen Enden der Biegebalken 19 der Biegebalkenstruktur 18 werden durch das Magnetfeld des Permanentmagneten 5 auf die Kontaktflächen 16 gezogen und kontaktiert. Entsprechend der Position des Permanentmagneten 5 wird eine elektrische Verbindung zu den dazugehörigen Widerständen des Widerstandsnetzwerkes erzeugt und eine dieser Position entsprechende Signalspannung U_{AUS} abgegriffen. Es wird dabei ein gestuftes Ausgangssignal erzeugt, wie es in Figur 4 dargestellt ist.

Die Breite des Dauermagneten 5 ist so dimensioniert, daß mehrere nebeneinander liegende, frei bewegliche Enden 19 der Biegebalkenstruktur 18 gleichzeitig mit den entsprechenden Kontaktflächen 16 kontaktiert werden und somit redundant wirken, so daß etwaige Kontaktunterbrechungen nicht zum völligen Signalausfall des Meßsystems führen.

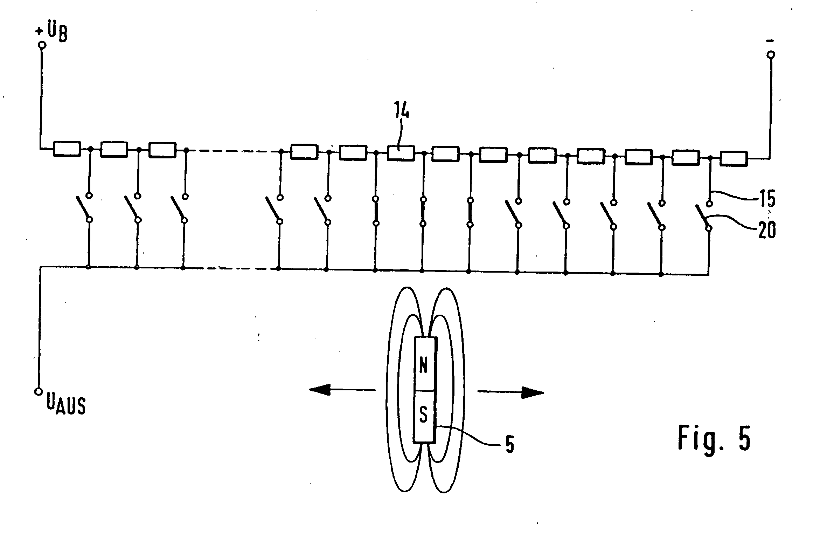

Dies ist im elektrischen Ersatzschaltbild des Positionssensors gemäß Figur 5 noch einmal verdeutlicht.

Die Einzelwiderstände des Widerstandsnetzwerkes 14 können, wie beschrieben, als Bahn oder als separate Einzelwiderstände ausgebildet sein.

Die Berührung der Biegebalkenelemente 19 mit den Kontaktflächen 16 an den Leiterbahnen 15 führt zum Schließen eines Schalters 20, wodurch das Ausgangssignal U_{AUs} erzeugt wird.

Der Abstandshalter 17 ist mittels einer temperaturbeständigen und ausgasungsfreien selbstklebenden Folie sowohl an der Biegebalkenstruktur 18 als auch am isolierenden Substrat 7 befestigt. Zur Herstellung einer direkten elektrischen Verbindung kann der Abstandshalter 17 metallisch ausgebildet sein.

Der Abstandshalter 17 kann vorzugsweise auch aus dem gleichen Material wie das Substrat 7 hergestellt sein.

Auch kann eine quer gebogene Biegebalkenstruktur 18 zur Abstandsgewinnung der Biegebalken 19 zu den Kontaktflächen 16 genutzt werden.

Das die Widerstandsbahn 14 und die weichmagnetische Folie 18 tragende isolierende Substrat 7 besteht aus einer Keramikplatte. Es ist aber auch der Einsatz von Glas- oder Kunststoffträgern oder glas- oder isolationsbeschichteten Metallplatten, sowie Silizium oder Epoxid-Leiterplattenmaterial denkbar.

Das isolierende Substrat 7, welches die Widerstandsbahn 14, die Leiterbahnen 15 mit den Kontaktflächen 16, den Abstandshalter 17 sowie die Biegebalkenstruktur 18 trägt, dient gleichzeitig als Gehäusewandung des Positionssensors, die mit einer Gehäuseabdeckung 8 verschlossen wird.

Bei der Verwendung einer metallischen Gehäuseabdeckung 8 kann die Abdeckung zum Korrosionsschutz und zur Verbesserung der Lötbarkeit vollständig verzinnt werden.

Anstelle der metallische Gehäuseabdeckung 8 ist auch eine lötfähige metallisierte Keramikabdeckung verwendbar.

Eine weitere Möglichkeit besteht darin, den Gehäusedeckel 8 mit dem Substrat 7 mit Kleber oder einer Schmelzfolie zu verkleben.

Eine metallisierte Schicht 22 als umlaufender Rand auf dem isolierenden Substrat 1 dient zur Verkapselung des Positionssensors. Zur Verbesserung der Lötbarkeit wird die Metallschicht 22 verzinnt.

Zur Realisierung der elektrischen Anschlüsse 11, 12, 13 werden Stifte durch das isolierende Substrat 7 geführt und dort hermetisch dicht und damit korrosionsbeständig mit der Widerstandsbahn 14 bzw. der Biegebalkenstruktur 18 verlötet oder verschweißt.

Alternativ können aber auch Verbindungsdrähte 23 über je eine dichte Glasdurchführung 27 nach außen geführt werden, wobei jede Glasdurchführung entweder durch das Substrat 7 oder durch die Gehäuseabdekkung 8 geführt wird.

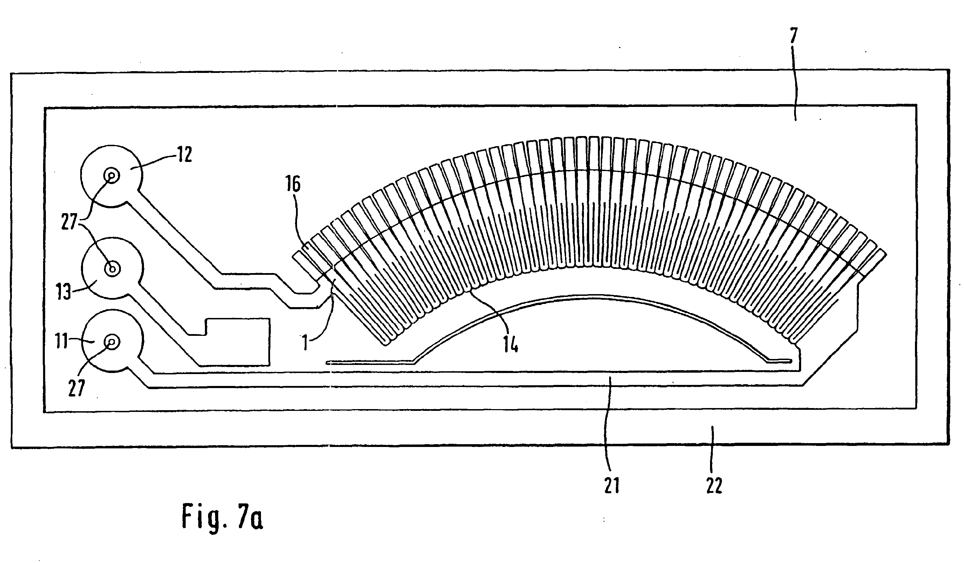

In einer weiteren Ausführung, wie sie in Figur 6 dargestellt ist, können die Durchführungslöcher für die elektrischen Anschlüsse, z.B. Anschluß 11 im Substrat 7 (oder der Gehäuseabdeckung 8), durch Zulöten mittels Auffüllen des Durchführungsloches mit Lötmittel 24 ohne Verbindungsdrähte abgedichtet werden. Der entstehende Lötpunkt 25 dient gleichzeitig als elektrischer Anschluß für von außen zugeführte Drähte 23. Dadurch wird zuverlässig verhindert, daß Feuchtigkeit durch die Durchführungslöcher in den Positonssensor eindringt. Das Widerstandsnetzwerk 14 ist über eine auf dem Substrat 7 befindliche Anschlußleiterbahn 21 mit dem Lötpunkt 25a des Lötmittels verbunden.

Im Bereich des umlaufenden Randes 26 der Gehäuseabdeckung 8 sind Substrat 7 und Gehäuseabdeckung 8, wie beschrieben, über die metallisierte Schicht 22 verlötet, verschweißt oder verklebt.

Anstelle der beschriebenen einstückigen Biegebalkenstruktur 18 können einzelne Biegebalkenelemente verwendet werden. Auch diese Biegebalkenelemente bestehen aus einer weichmagnetischen Folie und sind elektrisch leitfähig ausgebildet. Sie werden ebenfalls mittels einer selbstklebenden Folie am Abstandshalter 17 befestigt. Die Biegebalkenelemente sind so dimensioniert, daß sie durch eigene Federkraft ohne zusätzliche Hilfsmittel bei Nachlassen der Magneteinwirkung zurückstellen. Diese selbsttätige Rückstellung gilt auch für die zuvor beschriebene Biegebalkenstruktur.

Die Biegebalkenelemente sind elektrisch mit dem Abgriff 13 zur Lieferung des Positionssignals U_{AUS} verbunden. Diese Biegebalkenelemente können entweder aus weichmagnetischem Material oder aus einem nicht magnetischen Material bestehen, welches mit magnetischen Schichten versehen ist. Die Biegebalkenelemente sind dabei ebenfalls partiell mit einer Edelmetalischicht überzogen.

Der magnetische Positionssensor ist, wie beschrieben, einfach in Dickschichttechnik herstellbar. Dabei beträgt die Dicke der Schicht 5 - 50 µm, die Breite annähernd 0,2 mm und die Länge ungefähr 100 mm. Die Schichten werden in bekannter Dickschichttechnik mit Siebdruck aufgebracht und anschließend eingebrannt.

Das Widerstandsnetzwerk 14 des Positionssensors kann auf dem Substrat aber auch in Dünnschichttechnik hergestellt werden. Hier beträgt die Schichtdicke üblicherweise 0,5 bis 2 µm, die Schichtbreite wird zwischen 5 µm und 5 mm gewählt, während die Schichtlänge 1 mm bis 100 mm beträgt.

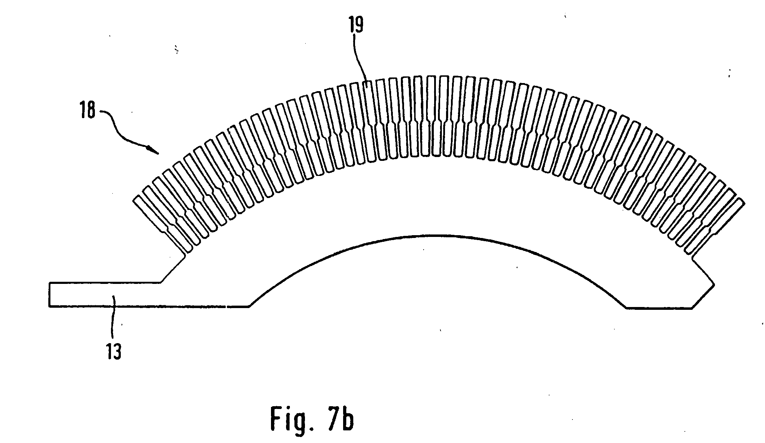

Die Leiterbahnen 15 liegen entweder zwischen Substrat 7 und Widerstandsbähn 14 oder die Widerstandsbahn 14 ist direkt auf dem Substrat 7 angeordnet und die Leiterbahnen 15 sind in der beschriebenen Konfiguration auf der Widerstandsbahn 14 angeordnet. Dies hat den Vorteil, daß die gesamte Fläche einer Leiterbahn 15 als Kontaktfläche 16 in der beschriebenen Art und Weise verwendbar ist. Es ist auch denkbar, daß Widerstandsbahn 14 und Kontaktflächen 16 in einem Layout auf das Substrat aufgebracht werden (Figur 7a). Die Widerstandsbahn 14 weist-dabei eine mäanderförmige Struktur auf, wodurch eine bessere Unterteilung der Widerstandsbahn 14 in Einzelwiderstände möglich ist. An jeden Mäander schließt sich einstückig eine Kontaktfläche 16 an. Bei der in Figur 7b dargestellten Biegebalkenstruktur 18 sind die Biegebalken 19 in ihrem Mittelstück tailliert ausgebildet, was eine bessere Beweglichkeit des einzelnen Biegebalkens ermöglicht.

Neben der beschriebenen Ausführung des magnetischen Positionsgebers sind für Füllstandsgeber aber auch linear ausgebildete magnetische Positionsgeber denkbar.

## Patentansprüche

1. Füllstandsgeber, insbesondere für den Tank eines Kraftfahrzeuges, bei welchem ein Widerstandsnetzwerk an einem feststehenden Träger angeordnet ist, wobei am Widerstandsnetzwerk entsprechend der Position eines dem Niveau einer Flüssigkeit folgenden Schwimmers ein Ausgangssignal abnehmbar ist, **dadurch gekennzeichnet, daß** dem Widerstandsnetzwerk (14) beabstandet eine Kontaktstruktur (18) zugeordnet ist, die unter Einwirkung einer durch den Schwimmer (2) bewegbaren Magneteinrichtung (5) in der Art auslenkbar ist, daß eine von der Position des Schwimmers (2) abhängige elektrische Verbindung bewirkt wird, wobei das Widerstandsnetzwerk (14) auf einem Substrat (7) angeordnet ist und die Knotenpunkte des Widerstandsnetzwerkes (14) mit ebenfalls auf dem Substrat (7) aufgebrachten Kontaktflächen (16) verbunden sind und die kontaktflächen (16), sowie die kontaktstruktur (18) in einem dichten gehäuse (7,8) eingeschlossen sind, wobei das isolierende Substrat (7) gleichzeitig als Gehäusewandung dient, welches mit einer Gehäuseabdeckung (8) dicht verschlossen ist, und die Magneteinrichtung (5) außerhalb des dichten gehäuses (7,8) bewegbar ist.

2. Füllstandsgeber nach Anspruch 1, **dadurch gekennzeichnet, daß** auf dem Substrat (7) Leiterbahnen (15) angeordnet sind und daß ein Ende jeder Leiterbahn (15) eine Kontaktfläche (16) bildet.

3. Füllstandsgeber nach Anspruch 1 oder 2, **dadurch gekennzeichnet, daß** die Kontaktstruktur (18) in konstantem Abstand zu den Kontaktflächen (16) angeordnet ist, welche unter Einwirkung der Magneteinrichtung (5) mit der Kontaktstruktur (18) in Berührung treten.

4. Füllstandsgeber nach Anspruch 1 oder 3, **dadurch gekennzeichnet, daß** die Kontaktstruktur (18) eine Kontaktfederstruktur ist.

5. Füllstandsgeber nach Anspruch 4, **dadurch gekennzeichnet, daß** die Kontaktfederstruktur aus separaten Kontaktfedern besteht.

6. Füllstandsgeber nach Anspruch 4, **dadurch gekennzeichnet, daß** die Kontaktfederstruktur eine einstückige Biegebalkenstruktur ist.

7. Füllstandsgeber nach einem der vorhergehenden Ansprüche 4 bis 6, **dadurch gekennzeichnet, daß** die Kontaktfederstruktur aus weichmagnetischem Material besteht.

8. Füllstandsgeber nach einem der vorhergehenden Ansprüche 4 bis 6, **dadurch gekennzeichnet, daß** die Kontaktfederstruktur aus nichtmagnetischem Material besteht, welches mit mindestens einer magnetischen Schicht versehen ist.

9. Füllstandsgeber nach Anspruch 1 oder 2, **dadurch gekennzeichnet, daß** das Widerstandsnetzwerk (14) als schichtförmige Widerstandsbahn ausgebildet ist.

10. Füllstandsgeber nach Anspruch 9, **dadurch gekennzeichnet, daß** die Widerstandsbahn (14) eine mäanderförmige Struktur aufweist.

11. Füllstandsgeber nach Anspruch 10, **dadurch gekennzeichnet, daß** sich die Kontaktflächen (16) direkt an die mäanderförmige Struktur anschließen.

12. Füllstandsgeber nach einem der vorhergehenden Ansprüche 9, 10 oder 11, **dadurch gekennzeichnet, daß** die Widerstandsbahn (14) in Dünnschichttechnik hergestellt ist.

13. Füllstandsgeber nach Anspruch 9, **dadurch gekennzeichnet, daß** die Widerstandsbahn (14) in Dickschichttechnik hergestellt ist.

14. Füllstandsgeber nach einem der Ansprüche 9 bis 13, **dadurch gekennzeichnet, daß** die Leiterbahnen (15) ganz oder teilweise auf der Widerstandsbahn (14) angeordnet sind.

15. Füllstandsgeber nach einem der Ansprüche 2 und 9, **dadurch gekennzeichnet, daß** die Leiterbahnen (15) teilweise mit der Widerstandsbahn (14) bedeckt sind und ein von der Widerstandsbahn unbedecktes Ende jeder Leiterbahn (15) die Kontaktfläche (16) bildet.

16. Füllstandsgeber nach Anspruch 15, **dadurch gekennzeichnet, daß** die Leiterbahnen (15) niederohmiger als die Einzelwiderstände des Widerstandsnetzwerkes (14) ausgebildet sind.

17. Füllstandsgeber nach einem der vorhergehenden Ausprüche, **dadurch gekennzeichnet, daß** die Magneteinrichtung (5) gegen die Außenseite des Gehäuses (7, 8) vorgespannt ist, so daß sie leicht berührend bewegbar ist.

18. Füllstandsgeber nach Anspruch 17, **dadurch gekennzeichnet, daß** die Vorspannung durch ein Federelement erzeugt ist, welches gleichzeitig zur Aufnahme der Magneteinrichtung (5) dient.

19. Füllstandsgeber nach Anspruch 1, **dadurch gekennzeichnet, daß** elektrische Anschlüsse (10, 11, 12) des Widerstandsnetzwerkes (14) und ein elektrischer Anschluß (13) der Kontaktfederstruktur (18) abgedichtet nach außen geführt sind.

20. Füllstandsgeber nach Anspruch 1, **dadurch gekennzeichnet, daß** der Schwimmer (2) über einen Schwimmerhebel (3) mit der Magneteinrichtung (5) verbunden ist.

21. Füllstandsgeber nach Anspruch 20, **dadurch gekennzeichnet, daß** der Schwimmerhebel (3) gleichzeitig zur Aufnahme der Magneteinrichtung (5) dient.

## Claims

1. Filling level indicator, in particular for the tank of a motor vehicle, in which a resistor network is arranged on a fixed support, it being possible to pick up an output signal from the resistor network in accordance with the position of a float following the level of a liquid, **characterized in that** the resistor network (14) is assigned, at a distance from it, a contact structure (18) which, under the effect of a magnetic device (5) that can be moved by the float (2), can be deflected in such a way that an electrical connection dependent on the position of the float (2) is brought about, the resistor network (14) being arranged on a substrate (7) and the nodes of the resistor network (14) being connected to contact surfaces (16) that are likewise applied to the substrate (7), and the contact surfaces (16) and the contact structure (18) being enclosed in a sealed housing (7, 8), the insulating substrate (7) serving at the same time as a housing wall which is closed in a sealed manner by a housing cover (8), and the magnetic device (5) being movable outside the sealed housing (7, 8).

2. Filling level indicator according to Claim 1, **characterized in that** conductor tracks (15) are arranged on the substrate (7) and **in that** one end of each conductor track (15) forms a contact surface (16).

3. Filling level indicator according to Claim 1 or 2,
**characterized in that** the contact structure (18) is arranged at a constant distance from the contact surfaces (16) which come into contact with the contact structure (18) under the effect of the magnetic device (5).

4. Filling level indicator according to Claim 1 or 3,
**characterized in that** the contact structure (18) is a contact spring structure.

5. Filling level indicator according to Claim 4, **characterized in that** the contact spring structure comprises separate contact springs.

6. Filling level indicator according to Claim 4, **characterized in that** the contact spring structure is a one-piece flexural bar structure.

7. Filling level indicator according to one of the preceding Claims 4 to 6, **characterized in that** the contact spring structure consists of soft-magnetic material.

8. Filling level indicator according to one of the preceding Claims 4 to 6, **characterized in that** the contact spring structure consists of non-magnetic material which is provided with at least one magnetic layer.

9. Filling level indicator according to Claim 1 or 2,
**characterized in that** the resistor network (14) is formed as a resistor track in film form.

10. Filling level indicator according to Claim 9, **characterized in that** the resistor track (14) has a meandering structure.

11. Filling level indicator according to Claim 10, **characterized in that** the contact surfaces (16) directly adjoin the meandering structure.

12. Filling level indicator according to one of the preceding Claims 9, 10 or 11, **characterized in that** the resistor track (14) is produced by the thin-film technique.

13. Filling level indicator according to Claim 9, **characterized in that** the resistor track (14) is produced by the thick-film technique.

14. Filling level indicator according to one of Claims 9 to 13, **characterized in that** the conductor tracks (15) are arranged completely or partially on the resistor track (14).

15. Filling level indicator according to either of Claims 2 and 9, **characterized in that** the conductor tracks (15) are partially covered by the resistor track (14) and one end of each conductor track (15) that is not covered by the resistor track forms the contact surface (16).

16. Filling level indicator according to Claim 15, **characterized in that** the conductor tracks (15) are formed with lower impedance than the individual resistors of the resistor network (14).

17. Filling level indicator according to one of the preceding claims, **characterized in that** the magnetic device (5) is prestressed against the outside of the housing (7, 8), so that it can be moved while maintaining light contact.

18. Filling level indicator according to Claim 17, **characterized in that** the prestress is produced by a spring element, which at the same time serves for receiving the magnetic device (5).

19. Filling level indicator according to Claim 1, **characterized in that** electrical terminals (11, 12) of the resistor network (14) and an electrical terminal (13) of the contact spring structure (18) are led to the outside in a sealed manner.

20. Filling level indicator according to Claim 1, **characterized in that** the float (2) is connected to the magnetic device (5) by means of a float lever (3).

21. Filling level indicator according to Claim 20, **characterized in that** the float lever (3) serves at the same time for receiving the magnetic device (5).

## Revendications

1. Capteur de niveau de remplissage, notamment pour le réservoir d'un véhicule automobile, où un réseau de résistances est monté sur un support fixe, un signal de sortie pouvant être prélevé sur le réseau de résistances en fonction de la position d'un flotteur qui suit le niveau d'un liquide, **caractérisé par le fait qu'**une structure de contact (18) est placée à une certaine distance du réseau de résistances (14) et peut dévier, sous l'effet d'un dispositif magnétique (5) pouvant être déplacé par le flotteur (2), de telle manière qu'une liaison électrique dépendant de la position du flotteur (2) est établie, le réseau de résistances (14) étant disposé sur un substrat (7) et les points communs du réseau de résistances (14) étant reliés à des surfaces de contact (16) également placées sur le substrat (7), où les surfaces de contact (16) ainsi que la structure de contact (18) sont enfermées dans un boîtier étanche (7, 8), le substrat isolant (7) servant en même temps de paroi au boîtier qui est fermé d'une façon étanche par un couvercle (8), et où le dispositif magnétique (5) se déplace à l'extérieur du boîtier étanche (7, 8).

2. Capteur de niveau de remplissage selon la revendication 1, **caractérisé par le fait que** des pistes conductives (15) sont disposées sur le substrat (7) et qu'une extrémité de chaque piste conductive (15) forme une surface de contact (16).

3. Capteur de niveau de remplissage selon la revendication 1 ou 2, **caractérisé par le fait que** la structure de contact (18) est disposée à une distance constante des surfaces de contact (16), lesquelles entrent, sous l'effet du dispositif magnétique (5), en contact avec la structure de contact (18).

4. Capteur de niveau de remplissage selon la revendication 1 ou 3, **caractérisé par le fait que** la structure de contact (18) est une structure à ressorts de contact.

5. Capteur de niveau de remplissage selon la revendication 4, **caractérisé par le fait que** la structure à ressorts de contact est composée de ressorts de contact séparés.

6. Capteur de niveau de remplissage selon la revendication 4, **caractérisé par le fait que** la structure à ressorts de contact est une structure en une seule pièce à lamelles flexibles.

7. Capteur de niveau de remplissage selon l'une des revendications précédentes 4 à 6, **caractérisé par le fait que** la structure à ressorts de contact est en matière à magnétisation douce.

8. Capteur de niveau de remplissage selon l'une des revendications précédentes 4 à 6, **caractérisé par le fait que** la structure à ressorts de contact est en matière non magnétique recouverte d'au moins une couche magnétique.

9. Capteur de niveau de remplissage selon la revendication 1 ou 2, **caractérisé par le fait que** le réseau de résistances (14) est conçu comme barrette de résistances en forme de couche.

10. Capteur de niveau de remplissage selon la revendication 9, **caractérisé par le fait que** la barrette de résistances (14) a une structure en forme de méandres.

11. Capteur de niveau de remplissage selon la revendication 10, **caractérisé par le fait que** les surfaces de contact (16) suivent directement la structure en forme de méandres.

12. Capteur de niveau de remplissage selon l'une des revendications précédentes 9, 10 ou 11, **caractérisé par le fait que** la barrette de résistances (14) est fabriquée en technologie à couches minces.

13. Capteur de niveau de remplissage selon la revendication 9, **caractérisé par le fait que** la barrette de résistances (14) est fabriquée en technologie à couches épaisses.

14. Capteur de niveau de remplissage selon l'une des revendications 9 à 13, **caractérisé par le fait que** les pistes conductives (15) sont disposées entièrement ou partiellement sur la barrette de résistances (14).

15. Capteur de niveau de remplissage selon l'une des revendications 2 à 9, **caractérisé par le fait que** les pistes conductives (15) sont partiellement recouvertes par la barrette de résistances (14) et qu'une extrémité de chaque piste conductive (15), qui n'est pas recouverte par la barrette de résistances, forme la surface de contact (16).

16. Capteur de niveau de remplissage selon la revendication 15, **caractérisé par le fait que** les pistes conductives (15) ont une résistance ohmique inférieure aux différentes résistances du réseau de résistances (14).

17. Capteur de niveau de remplissage selon l'une des revendications précédentes, **caractérisé par le fait que** le dispositif magnétique (5) est appliqué avec une force de précontrainte contre la face extérieure du boîtier (7, 8), si bien qu'il se déplace en l'effleurant légèrement.

18. Capteur de niveau de remplissage selon la revendication 17, **caractérisé par le fait que** la force de précontrainte est produite par un élément à ressort qui sert en même temps de support pour le dispositif magnétique (5).

19. Capteur de niveau de remplissage selon la revendication 1, **caractérisé par le fait que** les raccordements électriques (10, 11, 12) du réseau de résistances (14) et un raccordement électrique (13) de la structure (18) à ressorts de contact sont amenés vers l'extérieur d'une façon étanche.

20. Capteur de niveau de remplissage selon la revendication 1, **caractérisé par le fait que** le flotteur (2) est lié au dispositif magnétique (5) par l'intermédiaire d'un levier de flotteur (3).

21. Capteur de niveau de remplissage selon la revendication 20, **caractérisé par le fait que** le levier de flotteur (3) sert en même temps de support au dispositif magnétique (5).
